# FASCICULE DE BREVET EUROPEEN

(11) **EP 4 205 538 B1**
(45) Date de publication et mention de la délivrance du brevet: **22.01.2025**
(21) Numéro de dépôt: 22202850.8
(22) Date de dépôt: 20.10.2022
(51) Int. Cl.: A01G 31/06

(54) **DISPOSITIF D'AQUAPONIE**
AQUAPORINVORRICHTUNG
AQUAPONICS DEVICE

(30) Priorité: 30.12.2021 FR 2114665
(43) Date de publication de la demande: 05.07.2023
(73) Titulaire: Buisson, Marie, 42120 Le Coteau (FR)
(72) Inventeur: Buisson, Marie, 42120 Le Coteau (FR)
(74) Mandataire: Cabinet Laurent & Charras

(56) Documents cités:
- EP-A1- 3 422 840
- WO-A1-2019/117837
- US-A1- 2017 049 082
- US-A1- 2018 168 133

## Description

### Domaine technique

La présente invention se rapporte au domaine technique des dispositifs d'aquaponie, et concerne plus précisément un dispositif d'aquaponie sous forme de structure verticale.

### Art antérieur

Il est connu de l'état de la technique des dispositifs d'aquaponie de très grandes tailles qui occupent de très grands espaces, notamment des espaces extérieurs.

En pratique, ces dispositifs ne peuvent être installés que dans des environnements peu encombrés comme des champs. Ainsi, ces dispositifs ne sont pas adaptés à des environnements urbains ou périurbains ou encore dans des domiciles.

Il est également connu, afin de pouvoir bénéficier de systèmes d'aquaponie dans des milieux urbains ou périurbains, des dispositifs d'aquaponie de taille réduite sous forme de structures verticales pouvant être installées dans des espaces restreints, avec une emprise au sol réduite.

Ce type de structure verticale comprend un aquarium positionné dans une partie inférieure, ainsi qu'un système d'irrigation qui réalise le pompage de l'eau de l'aquarium vers les étages comprenant des cultures de végétaux ce qui permet de réaliser l'irrigation des végétaux.

En outre, le système d'irrigation est constitué de tuyaux positionnés à l'extérieur des montants composant la structure ou encore à l'intérieur des montants comme illustré par le document KR10-1479977.

En effet, ce document propose un dispositif d'aquaponie comprenant des tuyaux d'irrigation positionnés dans les montants de la structure verticale. Le système d'irrigation comprend une pompe qui irrigue directement le dernier étage de culture de végétaux et par un système d'irrigation secondaire, qui utilise la gravité, réalise le passage de l'eau des étages supérieurs vers les étages inférieurs, afin de réaliser l'irrigation des étages inférieurs de manière autonome.

Cependant, une telle configuration entraine une diminution de l'apport en minéraux aux végétaux des étages inférieurs. En effet, l'eau transitant dans les étages supérieurs est déjà filtrée par les végétaux, ce qui entraîne une diminution de la croissance des végétaux des étages inférieurs.

De plus, l'utilisation d'un tel système en cascade entraine l'utilisation d'un système d'évacuation d'eau complexe qui alourdit le coût global du dispositif d'aquaponie.

Enfin, la structure décrite dans le document KR10-1479977 n'est pas totalement modulaire. Il n'est pas possible d'ajouter ou enlever des étages de la structure à la guise de l'utilisateur afin notamment de s'adapter de manière plus efficace aux différents types d'espace pouvant accueillir une structure d'aquaponie.

Il est également connu les documents US2017/049082, EP3422840 et US2018/168133 divulguent des dispositifs d'aquaponie que ne sont pas modulaire, ou bien dont la modularité peut être largement améliorée.

### Exposé de l'invention

L'un des buts de l'invention est donc de proposer un dispositif d'aquaponie modulaire comprenant une structure verticale apte à être installé dans les milieux urbains ou périurbains, qui permet une amélioration de la croissance des végétaux, le tout en ayant un coût global réduit.

À cet effet, il a été mis au point selon la revendication 1 un dispositif d'aquaponie sous la forme d'une structure verticale composée d'au moins deux montants tubulaires entre lesquels sont positionnés plusieurs étages, dont :
- un étage inférieur comprenant un aquarium et une pompe destinée à puiser de l'eau de l'aquarium,
- au moins deux étages supérieurs de culture végétale.

Selon l'invention, le premier montant tubulaire forme une canalisation d'alimentation en eau, ledit premier montant est segmenté en tronçons, dont un tronçon inférieur connecté de manière étanche par des moyens de connexion à l'étage inférieur et est relié à la pompe, et une pluralité de tronçons supérieurs chacun connecté de manière étanche par des moyens de connexion à un étage supérieur ;
- le deuxième montant tubulaire forme une canalisation d'évacuation d'eau, ledit deuxième montant est segmenté en tronçons, dont un tronçon inférieur connecté de manière étanche par des moyens de connexion à l'étage inférieur et est relié à l'aquarium, et une pluralité de tronçons supérieurs chacun connecté de manière étanche par des moyens de connexion à un étage supérieur, les moyens de connexion intégrant intérieurement des moyens de refoulement d'eau et des moyens d'évacuation d'eau.

De cette manière, les étages sont indépendants les uns des autres ce qui permet de pouvoir empiler les étages de la structure en fonction de l'environnement où elle peut être installée et des besoins en culture végétale.

De plus, le fait d'avoir un système d'irrigation indépendant pour chaque étage de culture végétale permet d'améliorer leur irrigation et notamment d'améliorer l'apport en minéraux par l'eau arrivant directement de l'aquarium pour chacun des étages de cultures végétales.

Par les termes « tronçons supérieurs » et « tronçon inférieur », on entend désigner le fait que les tronçons supérieurs sont positionnés au-dessus des tronçons inférieurs. Les notions de supérieur et d'inférieur se définissent par leur positionnement par rapport au sol.

De ce qui précède, les tronçons des montants tubulaires comprennent chacun des moyens de connexion à l'étage correspondant, et les moyens de refoulement et les moyens d'évacuation positionnés à l'intérieur des moyens de connexion ce qui permet une meilleure modularité de la structure. En d'autres termes, l'eau circule directement dans les montants et aux différents étages en passant pas l'intérieur des moyens de connexion. L'étage inférieur est donc traité comme un étage supérieur, avec la même modularité.

Les moyens de connexion sont de tous types appropriés, afin de connecter les tronçons de chaque étage avec les tronçons des étages supérieurs et/ou inférieurs.

Selon un mode de réalisation préféré, le dispositif comprend un moyen de connexion mâle positionné à une première extrémité de chaque tronçon, destiné à se connecter à un moyen de connexion femelle positionnée à une deuxième extrémité de chaque tronçon. Le moyen de connexion femelle peut être formé directement par l'extrémité inférieure du tronçon.

Selon une forme de réalisation particulière, la pompe est une pompe péristaltique.

Ainsi, l'utilisation d'une pompe péristaltique permet d'assurer un débit régulier et continu sans que la pompe ne chauffe, ce qui permet d'éviter le réchauffement de l'eau de l'aquarium.

Pour améliorer davantage l'efficacité de la pompe et éviter de déranger les poissons présents dans l'aquarium, la pompe est positionnée dans un compartiment distinct juxtaposant l'aquarium.

Selon un mode de réalisation particulier, le dispositif comprend au moins un système d'élevage d'insectes positionné sur un étage supérieur.

De préférence, le système d'élevage d'insectes comprend une structure définissant deux compartiments séparés par une cloison, fixe ou amovible.

Dans un mode de réalisation préféré, les étages supérieurs comprennent au moins un bac dans lequel l'eau est refoulée.

De préférence, le bac comprend des encoches et est destiné à recevoir au moins un panneau de culture de végétaux.

Avantageusement, et afin de créer une synergie, le bac reçoit au moins un système d'élevage d'insectes, lesquels peuvent être nourris à partir des déchets végétaux, et être ensuite consommés par un homme.

Afin d'optimiser la croissance des végétaux, les étages supérieurs comprennent chacun un système d'éclairage artificiel, de préférence le système d'éclairage artificiel sont des diodes électroluminescentes.

Ainsi, la croissance des végétaux peut être réalisée en continu et /ou dans des endroits sombres, privés de lumière naturelle.

### Brève description des dessins

D'autres avantages et caractéristiques ressortiront mieux de la description qui va suivre, donnée à titre d'exemple non limitatif, du dispositif selon l'invention, à partir des dessins annexés dans lesquels :
[Fig. 1] est une représentation, vue de côté du dispositif d'aquaponie dans lequel est illustré le sens de circulation de l'eau, selon la présente invention.
[Fig. 2] est une représentation, similaire à la figure 1 vue de face, avec un système d'élevage d'insectes.
[Fig. 3] est une représentation en perspective des moyens de connexion des tronçons, ainsi que les moyens de refoulement et d'évacuation de l'eau.
[Fig. 4] est une représentation, en perspective de l'étage inférieur comprenant l'aquarium.
[Fig. 5] est une représentation, vue de dessus du dispositif d'aquaponie, comprenant plusieurs bacs de culture de végétaux et un système d'élevage d'insectes.
[Fig. 6] est une représentation en perspective du système d'élevage d'insectes.
[Fig. 7] est une représentation vue de dessus, d'un compartiment du système d'élevage d'insectes.

### Description détaillée de l'invention

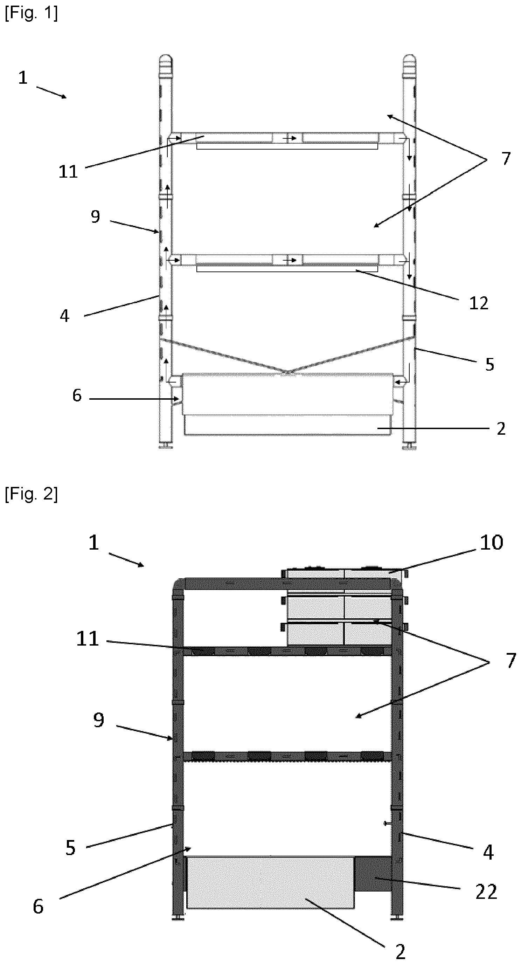

En référence aux figures 1 à 7, la présente invention concerne un dispositif (1) d'aquaponie capable de s'adapter à différents environnements afin d'être utilisé notamment dans des milieux urbains ou périurbains ou encore à domicile, le tout en améliorant la croissance des végétaux.

D'une manière connue, le dispositif (1) d'aquaponie est sous la forme d'une structure verticale composée d'au moins deux montants tubulaires entre lesquels sont positionnés plusieurs étages. Parmi ces étages, on distingue un étage inférieur (6) comprenant un aquarium (2) et une pompe (non représentée) destinée à puiser de l'eau de l'aquarium (2), et au moins deux étages supérieurs (7) de culture végétale.

Selon l'invention et afin d'améliorer la croissance des végétaux, le premier montant tubulaire (4) forme une canalisation d'alimentation en eau et le deuxième montant tubulaire (5) forme une canalisation d'évacuation d'eau.

Afin de rendre le dispositif (1) modulaire et de permettre au dispositif (1) de s'adapter, notamment à différentes hauteurs sous plafond, le premier montant (4) est segmenté en tronçons (9), dont un tronçon (9) inférieur est connecté à la pompe. Le deuxième montant (5) est lui aussi segmenté en tronçons (9), dont un tronçon (9) inférieur est relié à l'aquarium (2).

Le premier montant (4) tubulaire forme une canalisation d'alimentation en eau, ledit premier montant est segmenté en tronçons (9), dont un tronçon (9) inférieur connecté de manière étanche par des moyens de connexion (8) à l'étage inférieur (6) et est relié à la pompe, et une pluralité de tronçons (9) supérieurs chacun connecté de manière étanche par des moyens de connexion (8) à un étage supérieur (7).

Le deuxième montant (5) tubulaire forme une canalisation d'évacuation d'eau, ledit deuxième montant est segmenté en tronçons (9), dont un tronçon (9) inférieur connecté de manière étanche par des moyens de connexion (8) à l'étage inférieur (6) et est relié à l'aquarium (2), et une pluralité de tronçons (9) supérieurs chacun connecté de manière étanche par des moyens de connexion (8) à un étage supérieur (7), les moyens de connexion (8) intégrant intérieurement des moyens de refoulement (81) d'eau et des moyens d'évacuation (82) d'eau.

Par conséquent, un étage comprend un tronçon (9) de chacun des montants et permet ainsi de créer un circuit d'irrigation indépendant pour chaque étage, ce qui permet d'améliorer la croissance des végétaux, notamment par un apport plus important en minéraux et permet également de pouvoir moduler le dispositif (1).

La structure selon l'invention possède de préférence quatre montants.

De préférence, le dispositif (1) comprend un moyen de connexion mâle (31) positionné à une première extrémité (91) de chaque tronçon (9) destiné à se connecter à un moyen de connexion femelle (32) positionnée à une deuxième extrémité (92) de chaque tronçon (9) de l'étage supérieur (7).

La deuxième extrémité (92) du tronçon de l'étage inférieur (6) comprend quant à elle un moyen d'ajustement de la hauteur du montant (4, 5), tel qu'un pied réglable.

La pompe est de tout type adapté afin de réaliser le refoulement de l'eau dans les étages supérieurs (7) correspondant, de préférence la pompe est une pompe péristaltique.

La pompe péristaltique permet d'assurer un refoulement de l'eau de l'aquarium (2) à travers le premier montant (4) vers les étages supérieurs (7) avec un débit régulier sans risque de chauffe qui pourrait altérer la croissance des végétaux, mais aussi modifier la température de l'aquarium (2).

De préférence, et afin de ne pas perturber les poissons de l'aquarium (2), la pompe est positionnée dans un compartiment (22) distinct qui juxtapose l'aquarium (2). L'aquarium (2) et le compartiment (22) de la pompe sont en communication fluidique afin de permettre le passage de l'eau de l'aquarium (2) vers le compartiment (22) afin que la pompe puisse envoyer l'eau dans le premier montant (4).

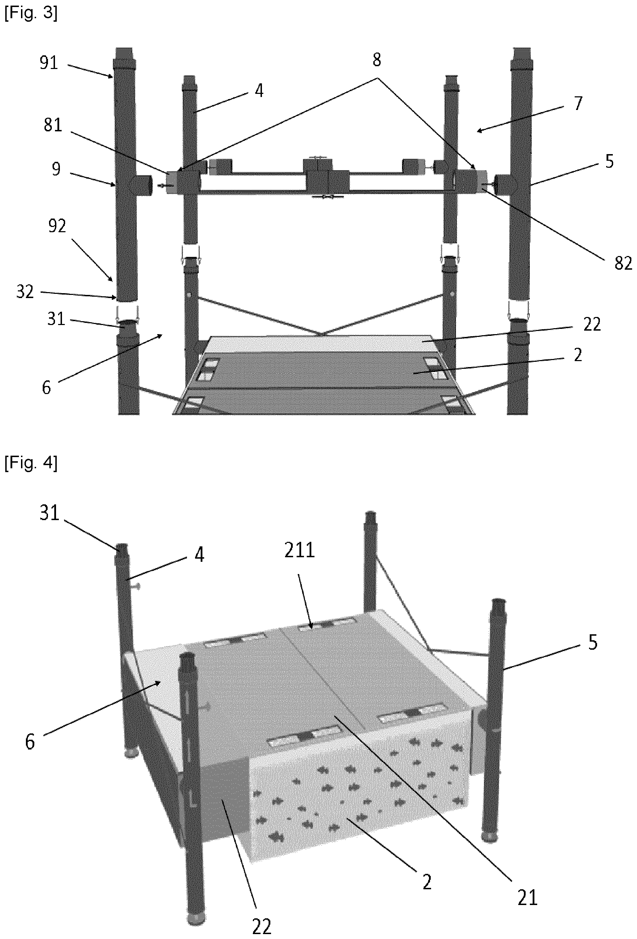

Comme illustré dans la figure 4, l'aquarium (2) comprend au moins deux plaques (21) munies d'encoches (211) afin de permettre d'ouvrir et de fermer l'aquarium (2) de manière aisée, notamment pour les opérations d'alimentation des poissons.

Dans un mode de réalisation préféré, les étages supérieurs (7) comprennent au moins un bac (11) dans lequel l'eau est refoulée. Le bac (11) est destiné à recevoir un panneau de culture de végétaux et/ou des systèmes d'élevage d'insectes (10).

Ainsi, les étages supérieurs (7) sont constitués des tronçons (9) de chacun des premier et deuxième montant (4, 5) relié par au moins un bac (11) par l'intermédiaire des moyens de refoulement (81) de l'eau et des moyens d'évacuation (82) d'eau positionnés respectivement sur chacun des tronçons (9) des premier et deuxième montants (4, 5).

De préférence et afin de d'améliorer la préhension du bac (11) par l'utilisateur, le bac (11) comprend des encoches (111) positionnées sur des côtés opposés du bac (11).

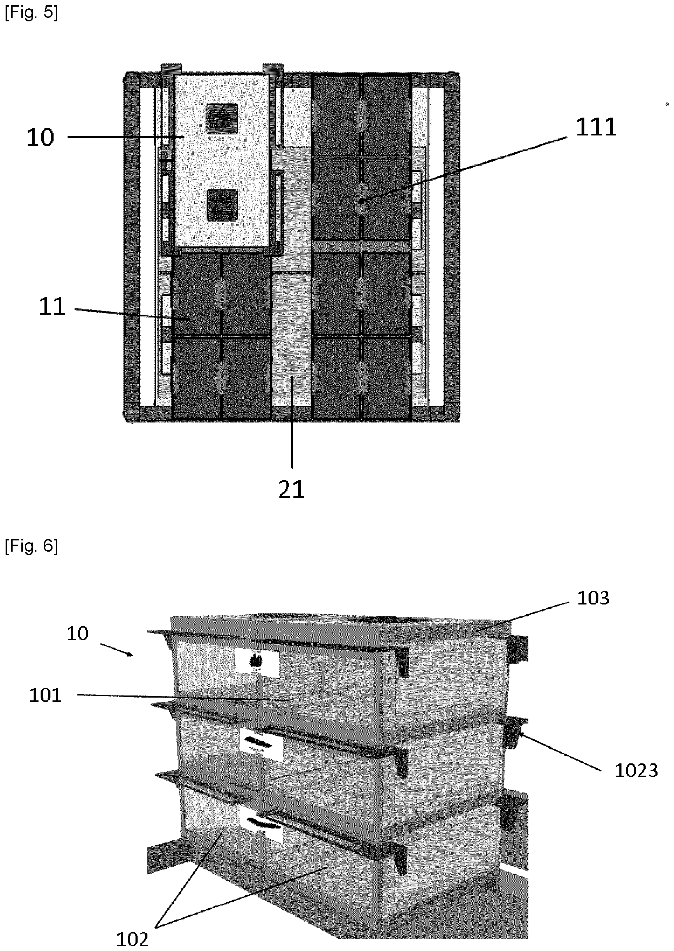

Selon un mode autre mode de réalisation, illustré en figure 5, un étage supérieur (7) de culture végétale comprend plusieurs bacs (11) de culture de végétaux, ce qui permet de varier les différentes espèces de végétaux sur un même étage.

Dans un mode de réalisation préféré, le dispositif (1) comprend au moins un système d'élevage d'insectes (10) positionné sur un étage supérieur (7).

De préférence, le système d'élevage d'insectes (10) est positionné sur le dernier étage du dispositif (1).

Le système d'élevage d'insectes (10) comprend une structure (103) possédant une cloison (101), la structure (103) est destinée à délimiter au moins deux compartiments (102) différents, séparés par la cloison (101), comme illustré à la figure 6.

De préférence, les deux compartiments (102) possèdent deux fonctions différentes, l'un pour la restauration des insectes et l'autre pour leur croissance. L'utilisateur peut fermer ou ouvrir les cloisons (101) afin de laisser passer ou empêcher le passage des insectes d'un compartiment à l'autre.

Dans un mode de réalisation préféré, la structure (103) comprend plusieurs étages, chacun adapté pour recevoir deux compartiments (102) différents et pour chaque étage, la structure (103) comprend une cloison (101). Ainsi, les compartiments des différents étages comprennent des insectes qui sont à des stades de développement différents.

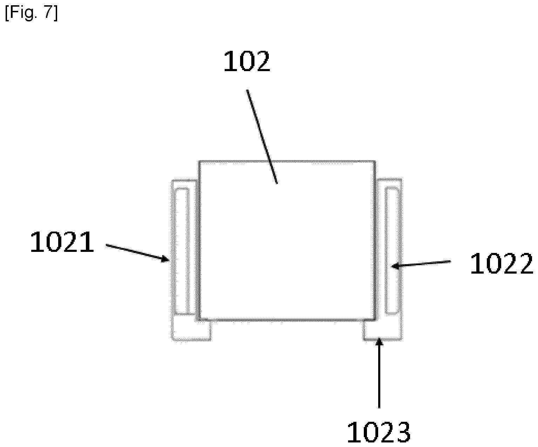

Afin de permettre une préhension et une insertion plus aisées dans la structure (103), les compartiments (102) comprennent des rails (1021) dotés d'une lumière (1022) afin d'avoir une meilleure préhension, lesdits rails sont prolongés sur une extrémité par des poignées (1023), comme illustré figure 7.

Ainsi, pour retirer les compartiments (102) de la structure (103), il faut que l'utilisateur positionne ses doigts dans les poignées (1023) afin de tirer vers lui le compartiment (102). Une fois cette opération réalisée et le compartiment (102) suffisamment avancé, l'utilisateur peut saisir les rails (1021) afin de terminer l'opération de retrait du compartiment (102). Pour insérer le compartiment (102), l'utilisateur n'a plus qu'à effectuer les opérations en sens inverse.

Dans un mode de réalisation particulier, les compartiments (102) du système d'élevage d'insectes (10) sont en matière transparente afin que l'utilisateur puisse observer de manière aisée le développement des insectes.

Les étages supérieurs (7) comprennent de préférence un système d'éclairage artificiel (12) positionné en dessous des bacs (11) de culture de végétaux, comme illustré en figure 1, par exemple sous forme de diodes électroluminescentes.

Ainsi, la croissance des végétaux peut être réalisée en continu et /ou dans des endroits sombres privés de lumière naturelle, avec une consommation d'énergie réduite.

Il ressort de ce qui précède que l'invention fournit bien un dispositif (1) d'aquaponie modulaire comprenant une structure verticale modulaire apte à être installée dans les milieux urbains ou périurbains ou encore à domicile, qui permet une amélioration de la croissance des végétaux.

L'installation permet une synergie favorisant l'alimentation humaine. L'être humain peut se nourrir des poissons élevés, lesquels abondent l'eau de nutriment pour les végétaux qui sont aussi consommable par les humains. Les déchets végétaux permettent de nourrir les insectes, lesquels sont aussi ensuite consommés par les humains.

## Revendications

1. Dispositif (1) d'aquaponie sous la forme d'une structure verticale composée d'au moins deux montants tubulaires entre lesquels sont positionnés plusieurs étages, dont :
- un étage inférieur (6) comprenant un aquarium (2) et une pompe destinée à puiser de l'eau de l'aquarium (2),
- au moins deux étages supérieurs (7) de culture végétale ;
- le premier montant (4) tubulaire forme une canalisation d'alimentation en eau, ledit premier montant est segmenté en tronçons (9), dont un tronçon (9) inférieur connecté de manière étanche par des moyens de connexion (8) à l'étage inférieur (6) et est relié à la pompe, et une pluralité de tronçons (9)
- le deuxième montant (5) tubulaire forme une canalisation d'évacuation d'eau, ledit deuxième montant est segmenté en tronçons (9), dont un tronçon (9) inférieur connecté de manière étanche par des moyens de connexion (8) à l'étage inférieur (6) et est relié à l'aquarium (2), et une pluralité de tronçons (9) supérieurs;
**caractérisé en ce que**
chaque tronçon (9) supérieur du premier montant est connecté de manière étanche par des moyens de connexion (8) à un étage supérieur (7) ; chaque tronçon (9) supérieurs du deuxième montant est connecté de manière étanche par des moyens de connexion (8) à un étage supérieur (7), les moyens de connexion (8) intégrant intérieurement des moyens de refoulement (81) d'eau et des moyens d'évacuation (82) d'eau.

2. Dispositif (1) selon la revendication 1, ***caractérisé* en ce qu'**il comprend un moyen de connexion mâle (31) positionné à une première extrémité (91) de chaque tronçon (9), destiné à se connecter à un moyen de connexion femelle (32) positionnée à une deuxième extrémité (92) de chaque tronçon (9).

3. Dispositif (1) selon l'une des revendications précédentes, ***caractérisé* en ce que** la pompe est une pompe péristaltique.

4. Dispositif (1) selon la revendication 1, ***caractérisé* en ce que** la pompe est positionnée dans un compartiment (22) distinct juxtaposant l'aquarium (2).

5. Dispositif (1) selon l'une des revendications précédentes, ***caractérisé* en ce qu'**il comprend au moins un système d'élevage d'insectes (10) positionné sur un étage supérieur (7).

6. Dispositif (1) selon la revendication 5, ***caractérisé* en ce que** le système d'élevage d'insectes (10) comprend une structure (103) définissant deux compartiments (102) séparés par une cloison (101).

7. Dispositif (1) selon l'une des revendications précédentes, ***caractérisé* en ce que** les étages supérieurs (7) comprennent au moins un bac (11) dans lequel l'eau est refoulée.

8. Dispositif (1) selon la revendication 7, ***caractérisé* en ce que** le bac (11) comprend des encoches (111) et est destiné à recevoir au moins un panneau de culture de végétaux.

9. Dispositif (1) selon la revendication 7, ***caractérisé* en ce que** le bac (11) reçoit au moins un système d'élevage d'insectes (10).

10. Dispositif (1) selon l'une des revendications précédentes, ***caractérisé* en ce que** les étages supérieurs (7) comprennent chacun un système d'éclairage artificiel, de préférence le système d'éclairage artificiel sont des diodes électroluminescentes.

## Patentansprüche

1. Aquaponikgerät (1) in Form einer vertikalen Struktur, die aus mindestens zwei rohrförmigen Pfosten besteht, zwischen denen mehrere Stockwerke positioniert sind, darunter:
- ein unteres Stockwerk (6), das ein Aquarium (2) und eine Pumpe umfasst, die dazu bestimmt ist, Wasser aus dem Aquarium (2) zu entnehmen,
- mindestens zwei obere Stockwerke (7) für den Pflanzenanbau;
- der erste rohrförmige Pfosten (4) bildet eine Wasserzufuhrleitung, wobei der erste Pfosten in Abschnitte (9) unterteilt ist, von denen ein unterer Abschnitt (9) durch Verbindungsmittel (8) dicht mit dem unteren Stockwerk (6) verbunden ist und mit der Pumpe verbunden ist, und eine Vielzahl von Abschnitten (9);
- der zweite rohrförmige Pfosten (5) bildet eine Wasserabflussleitung, wobei der zweite Pfosten in Abschnitte (9) unterteilt ist, von denen ein unterer Abschnitt (9) durch Verbindungsmittel (8) dicht mit dem unteren Stockwerk (6) verbunden ist und mit dem Aquarium (2) verbunden ist, und eine Vielzahl von oberen Abschnitten (9);
**dadurch gekennzeichnet, dass**
jeder obere Abschnitt (9) des ersten Pfostens dicht durch Verbindungsmittel (8) mit einem oberen Stockwerk (7) verbunden ist; jeder obere Abschnitt (9) des zweiten Pfostens dicht durch Verbindungsmittel (8) mit einem oberen Stockwerk (7) verbunden ist, wobei die Verbindungsmittel (8) innen Mittel zur Wasserförderung (81) und Mittel zur Wasserabführung (82) integrieren.

2. Aquaponikgerät (1) nach Anspruch 1, **dadurch gekennzeichnet, dass** es ein männliches Verbindungsmittel (31) umfasst, das an einem ersten Ende (91) jedes Abschnitts (9) positioniert ist und dazu bestimmt ist, mit einem weiblichen Verbindungsmittel (32) verbunden zu werden, das an einem zweiten Ende (92) jedes Abschnitts (9) positioniert ist.

3. Aquaponikgerät (1) nach einem der vorhergehenden Ansprüche, **dadurch gekennzeichnet, dass** die Pumpe eine peristaltische Pumpe ist.

4. Aquaponikgerät (1) nach Anspruch 1, **dadurch gekennzeichnet, dass** die Pumpe in einem separaten Fach (22) positioniert ist, das an das Aquarium (2) angrenzt.

5. Aquaponikgerät (1) nach einem der vorhergehenden Ansprüche, **dadurch gekennzeichnet, dass** es mindestens ein Insektenzuchtsystem (10) umfasst, das auf einem oberen Stockwerk (7) positioniert ist.

6. Aquaponikgerät (1) nach Anspruch 5, **dadurch gekennzeichnet, dass** das Insektenzuchtsystem (10) eine Struktur (103) umfasst, die zwei Fächer (102) definiert, die durch eine Trennwand (101) getrennt sind.

7. Aquaponikgerät (1) nach einem der vorhergehenden Ansprüche, **dadurch gekennzeichnet, dass** die oberen Stockwerke (7) mindestens ein Becken (11) umfassen, in das das Wasser zurückgeführt wird.

8. Aquaponikgerät (1) nach Anspruch 7, **dadurch gekennzeichnet, dass** das Becken (11) Kerben (111) umfasst und dazu bestimmt ist, mindestens ein Pflanzenkulturpaneel aufzunehmen.

9. Aquaponikgerät (1) nach Anspruch 7, **dadurch gekennzeichnet, dass** das Becken (11) mindestens ein Insektenzuchtsystem (10) aufnimmt.

10. Aquaponikgerät (1) nach einem der vorhergehenden Ansprüche, **dadurch gekennzeichnet, dass** die oberen Stockwerke (7) jeweils ein künstliches Beleuchtungssystem umfassen, vorzugsweise sind die künstlichen Beleuchtungssysteme Leuchtdioden.

## Claims

1. An aquaponics device (1) in the form of a vertical structure composed of at least two tubular uprights between which several levels are positioned, including:
- a lower level (6) comprising an aquarium (2) and a pump intended to draw water from the aquarium (2),
- at least two upper levels (7) of plant cultivation;
- the first tubular upright (4) forms a water supply pipe, said first upright is segmented into sections (9), including a lower section (9) connected in a watertight manner by connection means (8) to the lower level (6) and is connected to the pump, and a plurality of sections (9);
- the second tubular upright (5) forms a water drainage pipe, said second upright is segmented into sections (9), including a lower section (9) connected in a watertight manner by connection means (8) to the lower level (6) and is connected to the aquarium (2), and a plurality of upper sections (9);
**characterized in that**
each upper section (9) of the first upright is connected in a watertight manner by connection means (8) to an upper level (7); each upper section (9) of the second upright is connected in a watertight manner by connection means (8) to an upper level (7), the connection means (8) internally integrating water discharge means (81) and water drainage means (82).

2. The device (1) according to claim 1, **characterized in that** it includes a male connection means (31) positioned at a first end (91) of each section (9), intended to connect to a female connection means (32) positioned at a second end (92) of each section (9).

3. The device (1) according to any one of the preceding claims, **characterized in that** the pump is a peristaltic pump.

4. The device (1) according to claim 1, **characterized in that** the pump is positioned in a separate compartment (22) adjacent to the aquarium (2).

5. The device (1) according to any one of the preceding claims, **characterized in that** it includes at least one insect breeding system (10) positioned on an upper level (7).

6. The device (1) according to claim 5, **characterized in that** the insect breeding system (10) includes a structure (103) defining two compartments (102) separated by a partition (101).

7. The device (1) according to any one of the preceding claims, **characterized in that** the upper levels (7) include at least one tray (11) into which the water is discharged.

8. The device (1) according to claim 7, **characterized in that** the tray (11) includes notches (111) and is intended to receive at least one plant cultivation panel.

9. The device (1) according to claim 7, **characterized in that** the tray (11) receives at least one insect breeding system (10).

10. The device (1) according to any one of the preceding claims, **characterized in that** the upper levels (7) each include an artificial lighting system, preferably the artificial lighting system consists of light-emitting diodes.
